Europäisches Patentamt

European Patent Office

Office européen des brevets

(19)

(11) Veröffentlichungsnummer : **0 470 935 B1**

(12) # EUROPÄISCHE PATENTSCHRIFT

(45) Veröffentlichungstag der Patentschrift :
**01.03.95 Patentblatt 95/09**

(51) Int. Cl.$^6$ : **G01K 17/16**

(21) Anmeldenummer : **91810612.1**

(22) Anmeldetag : **05.08.91**

(54) **Verfahren zur Wärmemengen Messung sowie Heizungsanlage zur Durchführung des Verfahrens.**

(30) Priorität : **09.08.90 CH 2595/90**

(43) Veröffentlichungstag der Anmeldung :
**12.02.92 Patentblatt 92/07**

(45) Bekanntmachung des Hinweises auf die
Patenterteilung :
**01.03.95 Patentblatt 95/09**

(84) Benannte Vertragsstaaten :
**AT CH DE DK FR IT LI NL SE**

(56) Entgegenhaltungen :
**EP-A- 0 150 068**
**EP-A- 0 403 806**
**CH-A- 240 829**
**CH-A- 458 933**

(56) Entgegenhaltungen :
**DE-A- 2 931 928**
**DE-A- 3 110 529**
**DE-A- 3 529 257**
**DE-C- 294 406**
**FR-A- 2 503 863**
**US-A- 4 306 293**

(73) Patentinhaber : **Meisser, Claudio**
**Moosstrasse 14**
**CH-6330 Cham (CH)**

(72) Erfinder : **Meisser, Claudio**
**Moosstrasse 14**
**CH-6330 Cham (CH)**

(74) Vertreter : **OK pat AG**
**Hinterbergstrasse 36,**
**Postfach 5254**
**CH-6330 Cham (CH)**

EP 0 470 935 B1

**Beschreibung**

Die Erfindung betrifft ein Verfahren zur Wärmemengen-Messung in einer Heizungsanlage mit in einem Verbraucherkreislauf umlaufendem Heizmedium, wobei die Wärmemenge durch Summierung der Momentanwert-Produkte des Medium-Durchflusses und der Differenz zwischen Vorlauf- und Rücklauftemperatur bestimmt wird und wobei die Heizungsanlage eine elektromotorisch angetriebene Kreiselpumpe zur Umwälzung des Heizmediums sowie Temperaturmessmittel zur Bestimmung der Medium-Temperaturen im Vorlauf und im Rücklauf enthält. Ebenso bezieht sich die Erfindung auf eine Heizungsanlage zur Durchführung eines solchen Verfahrens.

Ein Messverfahren der vorgenannten Art gehört mit dem Dokument EP-A-0 403 806 zum Stand der Technik im Sinne von Artikel 54(3) EPÜ; nach jenem Dokument werden Durchfluss-Momentanwerte aufgrund von bekannten Funktionszusammenhängen ("Kennlinienfelder") mit Grössen ermittelt, die an der Kreiselpumpe bzw. deren Antriebsmotor gemessen werden.

Die Wärmemengen-Messung, insbesondere die individuelle Messung des Heizenergie-Konsums einzelner Wohnungen oder von Wärmebezügern mit mehreren Verbrauchern (Radiatoren), gewinnt ständig an Bedeutung als Grundlage für die verbrauchsabhängige Heizkostenabrechnung. Im Unterschied zur Heizkostenverteilung anhand fraglicher Messmethoden und Verteilschlüssel ermöglicht die Wärmemengen-Messung eine gerechtere Kostenberechnung und -Verrechnung aufgrund des tatsächlichen Energiebezuges. Sie gibt erwiesenermassen Anreiz zu sparsamerem Heizbetrieb bzw. zu energiebewusstem Verhalten der Wärmebezüger.

Einleitend soll an die grundlegenden physikalischen Zusammenhänge bei der bestimmung der Wärmemenge (Wärmeenergie) erinnert werden: Beim Wärmebezug aus einem durch einen Verbraucher zirkulierenden Heizmedium ist der Momentanwert der Wärmeleistung

$$P_Q(t) = MD \cdot (H_V - H_R)$$

und die bezogene Wärmeenergie

$$Q = \int P_Q(t) \cdot dt,$$

wobei

$MD$ = Massendurchfluss des Heizmediums

$H_V$ = Enthalpie des Heizmediums im Vorlauf

$H_R$ = Enthalpie des Heizmediums im Rücklauf.

Anstelle der Enthalpiedifferenz ($H_V - H_R$) kann auch das Produkt von $c_m$ und der Temperaturdifferenz ($T_V - T_R$) eingesetzt werden:

$$(H_V - H_R) = c_m(T_V - T_R),$$

wobei

$T_V$ = Vorlauftemperatur

$T_R$ = Rücklauftemperatur

$c_m$ = mittlere spezifische Wärmekapazität des Heizmediums.

Für die Messung des Medium-Durchflusses in bekannten Wärmemengen-Messgeräten werden im wesentlichen Flügelrad- oder Woltmanzähler, Ultraschall-Durchflussmesser oder magnetisch-induktive Durchflussmesser verwendet. Solche Geräte sind allerdings für einen verbreiteten Einsatz nicht unproblematisch. Entweder erfordern sie eine aufwendige, periodische Wartung und Nacheichung, wofür sie aus der Heizungsanlage ausgebaut werden müssen, oder ihr Anschaffungspreis ist so hoch, dass sie - jedenfalls zur individuellen Energiemessung im Wohnbereich - oft nicht in betracht kommen. Bei kleineren Heizanlagen bzw. Wohnungen begnügt man sich deshalb mit der Heizkostenverteilung als Hilfsverfahren. Einer vermehrten Anwendung der Wärmemengen-Messung mit bekannten Messgeräten jeglicher Art steht aber hauptsächlich der Umstand entgegen, dass das Messgerät selbst immer zusätzliche Anlagekosten und in der Regel auch vermehrte Betriebskosten bedingt; der erhöhte Aufwand lässt deshalb eine Messung der Wärmeenergie meist nur bei grösseren Anlagen als gerechtfertigt erscheinen.

Schliesslich ist zu erwähnen, dass die vorgenannten, bekannten Geräte den Volumen-Durchfluss (Volumenstrom) des Heizmediums erfassen, während aber das eingangs genannte Messprinzip auf dem Massendurchfluss beruht. Im Rechenwerk, welches die Wärmemenge aufgrund der Durchfluss- und Temperaturdifferenzmessung laufend ermittelt und summiert, müssen deshalb bei jenen Messgeräten die Volumen-Durchflussmomentanwerte noch mit der Dichte des Mediums multipliziert werden; die Dichte ihrerseits ist wiederum abhängig von der Temperatur, was eine entsprechende Korrektur erfordert.

Ein weiterer, gewichtiger Nachteil bekannter Geräte zur Wärmemengen-Messung ist darin zu sehen, dass diese entweder mit einer im plombierten Zählergehäuse untergebrachten Batterie oder mittels Netzspeisung über eine plombierte Sicherung betrieben werden. Dadurch soll ein betrügerischer Wärmebezug mit laufender Umwälzpumpe, aber ohne gleichzeitige Zählung verhindert werden. Beide Versorgungsarten verursachen ho-

2

he Kosten: Der Batteriebetrieb durch periodische Wartung mit Batterieersatz und Neuplombierung, der Netzbetrieb infolge der besonderen Netzzuleitung und der plombierbaren Netzsicherung.

Mit der vorliegenden Erfindung soll eine Wärmemengen-Messung vorgeschlagen werden, die - bei Vermeidung der vorerwähnten Schwierigkeiten und Nachteile - für verbreitete Anwendung auch bei Anlagen geringerer Leistung geeignet ist, indem sie einen nur geringfügig erhöhten Anlagen-, Geräte- und Betriebsaufwand bedingt, aber dennoch eine für die individuelle Heizkostenabrechnung hinreichende Messgenauigkeit gewährleistet. Diese Aufgabe wird einerseits gelöst durch ein Messverfahren der eingangs genannten Art, wobei man:
- periodisch eine vorübergehende Sperrung des Heizmedium-Durchflusses im Verbraucherkreislauf erzwingt,
- jeweils bei gesperrtem Durchfluss den Leerlaufwert mindestens einer der Grössen
  - Druckdifferenz der Kreiselpumpe
  - Drehzahl des Pumpenmotors
  - elektrischer Wirk- oder Scheinwiderstand des Pumpenmotors
  - elektrische Wirk- oder Scheinleistung des Pumpenmotors misst,
- die entsprechende(n) Grösse(n) bei umlaufendem Medium laufend misst, und
- unter Heranziehung sowohl eines vorbestimmten Funktionszusammenhanges zwischen dieser Grösse und dem Durchfluss, als auch des vorangehend gemessenen Leerlaufwertes die Durchfluss-Momentanwerte bestimmt.

Anderseits wird bei einer Heizungsanlage, mit der ein solches Verfahren durchgeführt wird, davon ausgegangen, dass sie eine elektromotorisch angetriebene Kreiselpumpe zur Umwälzung des Heizmediums im Verbraucherkreislauf, Temperaturmessmittel zur Bestimmung der Medium-Temperaturen im Vorlauf und im Rücklauf, sowie ein an die Temperaturmessmittel angeschlossenes Rechenwerk zur Ermittlung der Wärmemenge aus Temperatur- und Durchfluss-Momentanwerten enthält. Eine solche Anlage ist erfindungsgemäss dadurch gekennzeichnet,
dass der Verbraucherkreislauf mindestens ein elektrisch steuerbares Absperrventil enthält, welches mit Zeitschaltmitteln verbunden ist, die das Ventil periodisch vorübergehend schliessen, dass mit dem Rechenwerk Messwertgeber für mindestens eine der Grössen
  - Druckdifferenz der Kreiselpumpe
  - Drehzahl des Pumpenmotors
  - elektrischer Wirk- oder Scheinwiderstand des Pumpenmotors
  - elektrische Wirk- oder Scheinleistung des Pumpenmotors verbunden sind, und
dass das Rechenwerk Speichermittel für Funktionszusammenhänge zwischen der mindestens einen genannten Grösse und dem Durchfluss enthält.

Ein wesentlicher Vorteil der erfindungsgemässen Wärmemengen-Messung besteht darin, dass sie weitgehend auf der Verwendung ohnehin vorhandener, für die Steuerung und Regelung des Heizbetriebes benötigter Anlageteile beruht. Insbesondere ist kein aufwendiger, zusätzlicher Durchfluss-Messteil mit physikalisch/elektrischem Messwert-Wandler und eigener, spezifischer Messgeräte-Elektronik erforderlich. Vielmehr kann direkt von elektrischen, am Pumpenmotor erfassten Messwerten ausgegangen werden (wenn auch einfache Druckdifferenz- oder Drehzahlgeber nicht ausgeschlossen werden sollen, falls solche etwa für andere Zwecke ohnehin vorhanden sind). Die Messung beruht ausserdem wesentlich auf vorbestimmten, für die Motor-Pumpengruppe spezifischen Funktionszusammenhängen sowie Ablauf- und Rechenprogrammen, die "softwaremässig" im (Mikroprozessor-gesteuerten) Rechenwerk gespeichert sind, was ebenfalls ohne nennenswerte Mehrkosten möglich ist. Es lässt sich deshalb mit minimalem Investitions-, Betriebs- und Wartungsaufwand eine dezentralisierte, individuelle Energiemessung bei einer Vielzahl von Wärmebezügern realisieren. Damit ist einerseits eine wichtige Voraussetzung für die effiziente Energieverteilung (z.b. aus Heizzentralen in Wohnsiedlungen usw.) erfüllt, anderseits sind auch ideale Verhältnisse für vielfältige Steuer- und Regelfunktionen (Komfortregelung, Einzelraum-Temperaturregelung usw.) beim einzelnen Wärmebezüger gegeben. Natürlich ist die Erfindung auch zur Anwendung bei grossen Wärmeerzeugungsanlagen oder beim Heizungsteil von Klimaanlagen usw. geeignet.

Für die Durchführung der erfindungsgemässen Wärmemengen-Messung werden also jedenfalls ein "eigener" Verbraucherkreislauf mit Vorlauf- und Rücklaufleitung und Umwälzpumpe sowie mindestens ein elektrisch steuerbares Absperrventil als Bestandteile der Heizungsanlage vorausgesetzt. Handelt es sich dabei um die Anlage eines einzelnen Wärmebezügers (z.b. Wohnungsheizung) in einem grösseren Verteilnetz mit Haupt-Vorlauf und -Rücklauf (z.b. zentralen Steigleitungen), von denen die einzelnen Verbraucherkreisläufe ausgehen, so sind damit gleichzeitig die wesentlichen, anlagemässigen Voraussetzungen für autonome Unterstationen gegeben: mit der Pumpe und einem eigenen hydraulischen Stellglied je Unterstation lässt sich eine selbst bei extremen betriebszuständen vollständig hydraulisch entkoppelte Energieverteilung zu den einzelnen Endabnehmern erreichen, und in den einzelnen Unterstationen bestehen optimale Bedingungen für die individuelle betriebsregelung. Wärmezählung und betriebsregelung sind dann hardware- und softwaremässig "integriert", die Anlagekomponenten sind unter Mehrfachausnützung an der Messung und an der Regelung gleichermassen beteiligt. Auch die gemeinsame Speisung des Pumpenmotors und der Regelelektronik mit integriertem Rechenwerk aus dem Wechselstromnetz ist dann "zwanglos" und ohne zusätzlichen Installationsaufwand gegeben, womit die Kosten des Batteriebetriebes entfallen und eine hohe betrugssicherheit erreicht werden kann.

Bezüglich des erfindungsgemässen Messverfahrens ist festzuhalten, dass die laufend gemessenen Betriebsgrössen (Druckdifferenz der Pumpe, Motordrehzahl, elektrischer Widerstand und Leistung des Motors) direkt vom Massendurchfluss [kg/h] des Mediums abhängig sind; es werden somit unmittelbar die Momentanwerte des Massendurchflusses bestimmt und mit der Differenz zwischen Vorlauf- und Rücklauftemperatur multipliziert, weshalb die Berücksichtigung der Medium-Dichte und deren Temperaturabhängigkeit im Rechenwerk entfällt.

Es ist an sich bekannt, dass bei von einem Asynchronmotor angetriebenen Kreiselpumpen (übliche Umwälzpumpen mit Spaltrohrmotor) die Druckdifferenz der Pumpe sowie die Drehzahl und der Wirkwiderstand des Motors jedenfalls im unteren Drehzahl- bzw. Durchflussbereich eine praktisch gleichlaufende Abhängigkeit vom Massendurchfluss aufweisen, dass diese Grössen messtechnisch also gewissermassen "austauschbar" sind. Anderseits liegt es aber keineswegs auf der Hand, dass anstelle des Wirkwiderstandes auch der Scheinwiderstand oder anstelle der Wirkleistung die Scheinleistung als unabhängige Variable verwendet werden können, was eine bedeutende Vereinfachung bei der laufenden Messung darstellt (Quotient bzw. Produkt aus Spannung und Strom). Wie bereits erwähnt, beruht das erfindungsgemässe Messverfahren u.a. auf dem Gedanken, die benötigten Funktionszusammenhänge - spezifisch für die verwendeten Anlagekomponenten - im voraus zu ermitteln und zu speichern; dabei kann die Speicherung sowohl in Form von Wertetabellen als auch als Algorithmen zur Funktionsberechnung erfolgen. Ein grundlegender Verfahrensschritt besteht ferner darin, periodisch (programmgesteuert) den Leerlaufwert der Grösse(n), deren Funktionszusammenhang verwendet wird, zu bestimmen.

Vorteilhafte Varianten des weiter oben definierten, erfindungsgemässen Verfahrens sind in den Ansprüchen 2 bis 8 , und besondere Ausgestaltungen der erfindungsgemässen Heizungsanlage sind in den Ansprüchen 10 und 11 angegeben.

Nachstehend wird die Erfindung anhand von Ausführungsbeispielen im Zusammenhang mit der Zeichnung näher erläutert.

| | |
|---|---|
| Fig. 1 | ist das Prinzipschema einer Heizungsanlage mit den erforderlichen Mitteln zur Durchführung des erfindungsgemässen Messverfahrens, |
| Fig. 2 | zeigt einen beispielsweisen zeitlichen Verlauf verschiedener Mess- und Steuergrössen, |
| Fig. 3 | veranschaulicht Funktionszusammenhänge verschiedener betriebsgrössen in Abhängigkeit vom Massendurchfluss MD für drei betriebsarten, |
| Fig. 4 | zeigt $\Delta p$-Kennlinien der Kreiselpumpe (Förderpumpe) und Netzkennlinien des hydraulischen Verbraucherkreislaufes jeweils in Funktion des Massendurchflusses MD, und |
| Fig. 5 bis 7 | veranschaulichen schematisch weitere Varianten von Heizungsanlagen in Abwandlung der Anlage nach Fig. 1, wobei einander entsprechende Anlageteile jeweils mit gleichen Bezugszahlen bezeichnet sind. |

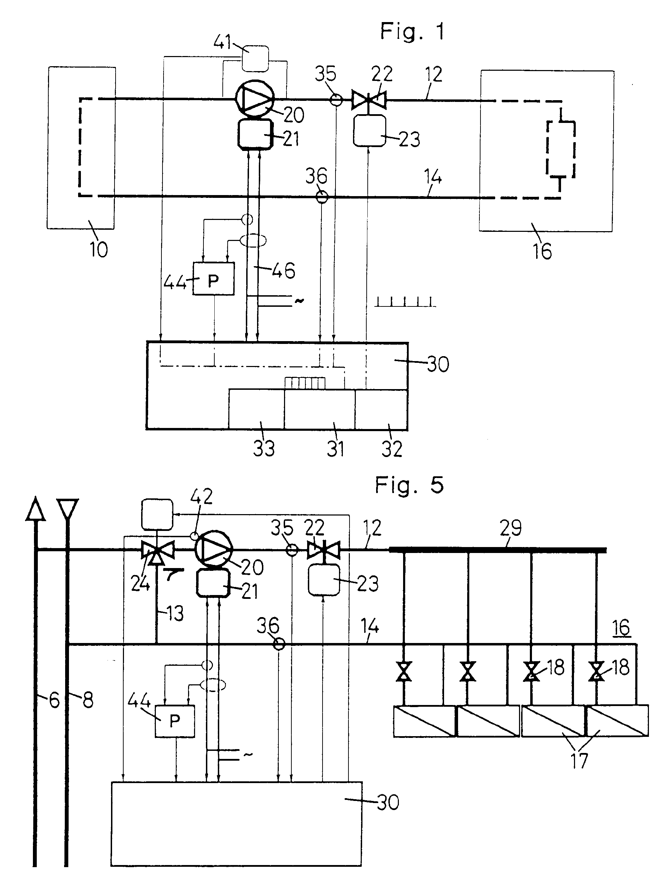

Im Schema einer Heizungsanlage nach Fig. 1 sind rein schematisch eine Wärmequelle 10 (hier ohne Differenzdruck angenommen) und ein Verbraucher 16 mit seinem hydraulischen Widerstand dargestellt. Es kann sich allgemein um eine autonome Anlage mit eigenem Heizkessel, eine an ein Blockheizwerk angeschlossene Unterstation, z.B. ein Wohnungsheizmodul in einer Mehrfamilien-Wohnsiedlung, aber auch z.B. um den Heizungsteil einer Klimaanlage, eine Prozesswärmeanlage usw. handeln.

Im Verbraucherkreislauf, welcher von der Vorlaufleitung 12 über den Verbraucher 16 und die Rücklaufleitung 14 verläuft, zirkuliert ein Heizmedium, z.B. Wasser, welches durch eine Kreiselpumpe 20 mit Elektromotor 21 umgewälzt wird. Der Verbraucherkreislauf enthält ferner ein (vorzugsweise im Vorlauf 12 eingebautes) elektrisch steuerbares Absperrventil 22 mit Ventilantrieb 23. Dieses wird, wie nachstehend beschrieben, im Zusammenhang mit der Wärmemengen-Messung durch Aktivierung des Antriebs 23 periodisch vollständig geschlossen, um jeweils eine vorübergehende Sperrung des Medium-Durchflusses zu erzwingen. Eine Steuerung oder Regelung des Wärmeverbrauchs bzw. des Wärmeflusses kann am Verbraucher 16 selbst oder auf vielfältige andere Weise durch Einwirkung auf den Verbraucherkreislauf erfolgen, wie ebenfalls weiter unten ausgeführt wird.

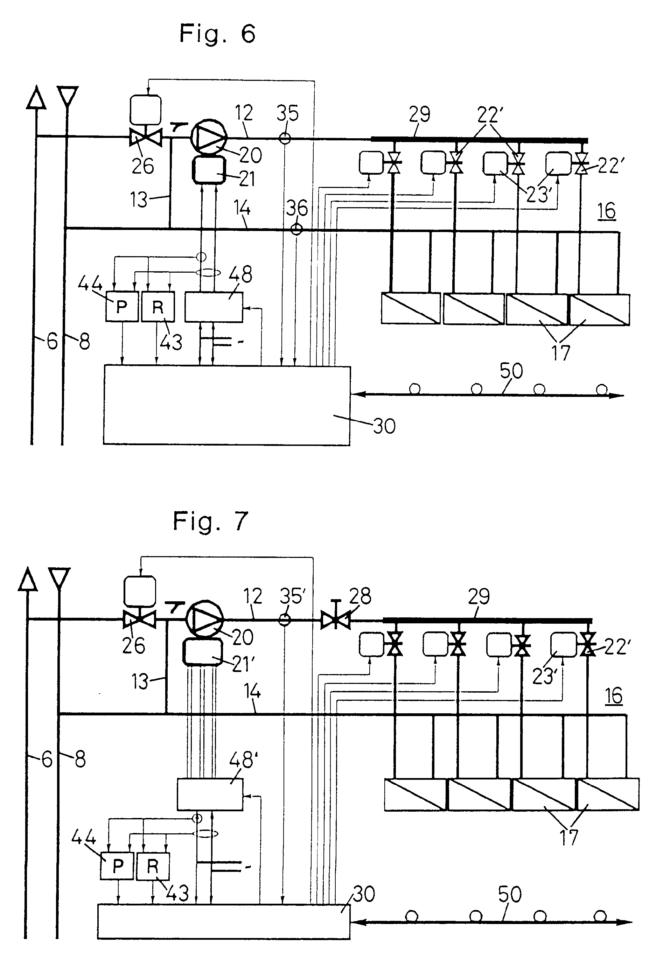

In einer schematisch dargestellten Mess-, Steuer- und Regeleinheit 30 sind die elektrischen und elektronischen Schaltkreise für die Durchführung der Wärmemengen-Messung, die Heizungsregelung sowie die Betriebsüberwachung zusammengefasst; vorzugsweise handelt es sich um eine Mikroprozessor-gesteuerte, speicherprogrammierte Einheit. Zur Durchführung des Messverfahrens enthält die Einheit 30 insbesondere ein Rechenwerk 31 mit Messwertanzeige, Speichermittel 33 für nachstehend beschriebene, vorbestimmte Funktionszusammenhänge sowie Zeitschaltmittel 32 für die Steuerung des Absperrventils 22 und allenfalls weiterer Mess- und Regelorgane. (Die vorgenannten Schaltungsmittel 31, 32 und 33 sind auch Bestandteil der Anlagen nach Fig. 5, 6 und 7, jedoch dort innerhalb der Einheit 30 nicht weiter dargestellt). An das Rechenwerk 31 sind Temperaturmessmittel zur Bestimmung der Mediumtemperaturen im Vorlauf 12 und im Rücklauf 14 angeschlossen; hierfür können an sich bekannte Temperaturfühler 35 bzw. 36 verwendet werden, wie z.b. Platin-, Nickel- oder Halbleitersensoren.

Die Anlage ist ausserdem mit weiteren Messwertgebern ausgerüstet, die mit dem Rechenwerk verbunden sind und laufend bestimmte betriebsgrössen erfassen, aufgrund derer das Rechenwerk in Verbindung mit den gespeicherten Funktionszusammenhängen die Durchfluss-Momentanwerte bestimmt. Die Bildung der Momentanwert-Produkte des Medium-Durchflusses und der Differenz zwischen Vorlauf- und Rücklauftemperatur und die Summierung dieser Momentanwert-Produkte im Rechenwerk ergibt dann in an sich bekannter Weise die vom Verbraucher 16 bezogene Wärmemenge. Beim Anlagebeispiel nach Fig. 1 sind als solche weiteren Messwertgeber ein Druckdifferenz-Geber 41 über der Umwälzpumpe 20 und/oder eine Multiplikatorschaltung 44 (vorzugsweise durch Mikroprozessor-Programmierung innerhalb der Einheit 10 realisiert) vorhanden; die letztere bestimmt die elektrische Leistung P des Pumpenmotors 21 aus Strom und Spannung an der Speiseleitung 46 des Motors. Wie weiter unten näher ausgeführt, genügt u.U. ein einziger Messwertgeber bzw. eine einzige erfasste Betriebsgrösse zur laufenden Bestimmung des Medium-Durchflusses.

Wie in Fig. 1 (und auch bei den Varianten nach Fig. 5, 6 und 7) dargestellt, sind der Pumpenmotor 21 und das Rechenwerk 31 bzw. die gesamte Einheit 30 gemeinsam aus dem Netz gespeist. Es sei an dieser Stelle eingefügt, dass es zweckmässig ist, die Anlage-internen Versorgungsleitungen 46 zwischen dem Pumpenmotor und dem Rechenwerk manipuliersicher auszuführen, also beispielsweise mittels Plombierung zu verhindern, dass die Umwälzpumpe 20 ohne gleichzeitige Speisung der Einheit 10 mit dem Rechenwerk 11 betrieben werden kann. Dadurch wird ein betrügerischer Wärmebezug ohne Wärmezählung verunmöglicht.

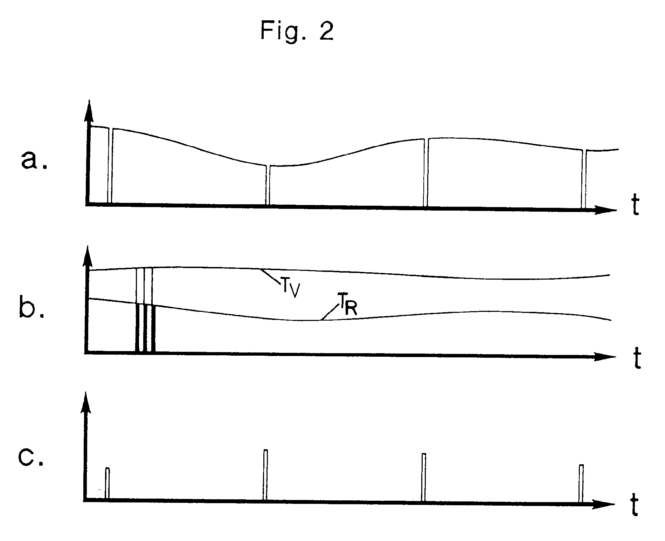

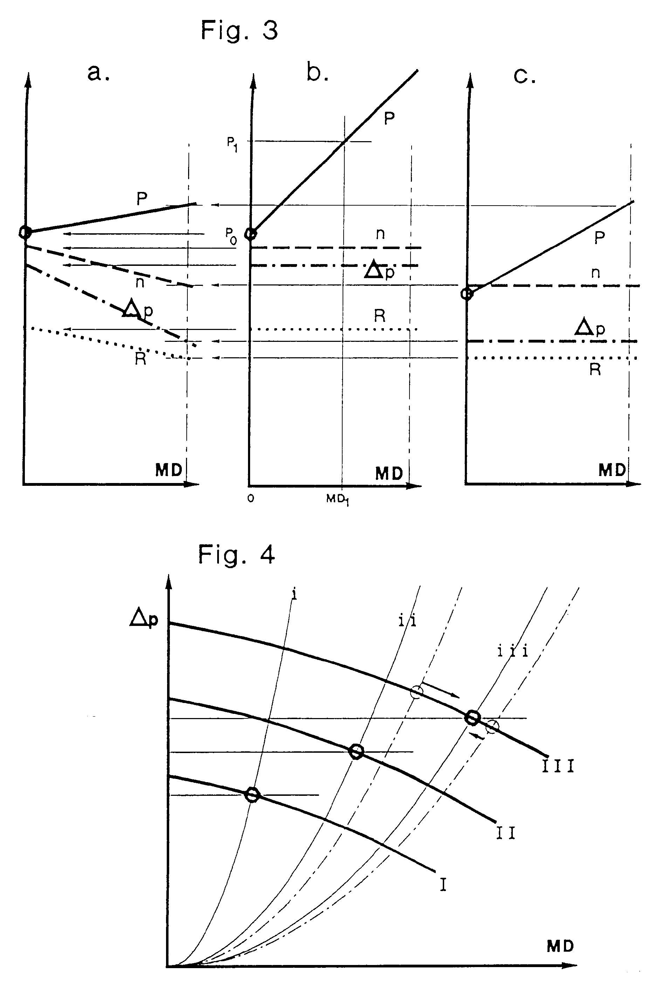

Anhand der Fig. 2 und 3 wird nun das Verfahren zur Messung der Wärmemenge im einzelnen erläutert. Fig. 2a zeigt einen beispielsweisen zeitlichen Verlauf des Medium-Durchflusses im Verbraucherkreislauf. Wie ersichtlich, wird der Durchfluss in regelmässigen Abständen vorübergehend, z.b. während einiger Sekunden, vollständig gesperrt, und zwar beim Beispiel nach Fig. 1 durch Schliessung des Absperrventils 22 mittels Ansteuerung durch die Zeitschaltmittel 32. Während der erzwungenen Sperrung des Durchflusses herrschen jeweils "Leerlaufbedingungen" für die Kreiselpumpe 20 bzw. den Pumpenmotor 21. Jeweils bei gesperrtem Durchfluss wird gemäss Fig. 2c der Leerlaufwert mindestens einer der Grössen

- Druckdifferenz der Kreiselpumpe
- Drehzahl des Pumpenmotors
- elektrischer Wirk- oder Scheinwiderstand des Pumpenmotors
- elektrische Wirk- oder Scheinleistung des Pumpenmotors

gemessen, und dieser Leerlaufwert bzw. diese Werte bleiben für die anschliessende Zeitperiode bis zur nächsten Sperrung des Durchflusses gespeichert. Beim beispiel nach Fig. 1 sei angenommen, dass auf diese Weise jeweils die Leerlaufwerte der Druckdifferenz mittels dem Geber 41 und der elektrischen Motorleistung mittels der Multiplikatorschaltung 44 gemessen werden; weitere Möglichkeiten werden weiter unten anhand der Beispiele nach Fig. 5, 6 und 7 beschrieben. Wie ausserdem aus Fig. 2b ersichtlich ist, werden laufend die Werte der Vorlauftemperatur $T_V$ und der Rücklauftemperatur $T_R$ gemessen, beispielsweise gemäss Fig. 1 durch relativ häufige Ansteuerung und "Abfrage" der Messwertgeber 35 und 36 von der Einheit 30 aus.

Das Rechenwerk 31 ermittelt bei umlaufendem Heizmedium laufend die Durchfluss-Momentanwerte, und zwar aufgrund der laufend gemessenen betriebsgrössen, ausgehend vom vorangehend gemessenen Leerlaufwert und vorbestimmter, in den Speichermitteln 33 gespeicherter Funktionszusammenhänge zwischen diesen Grössen und dem Durchfluss. Die Fig. 3 zeigt solche Funktionszusammenhänge (elektrische Motorleistung P, Motordrehzahl n, Druckdifferenz $\Delta p$ der Pumpe, elektrischer Motorwiderstand R jeweils in Abhängigkeit vom Massendurchfluss MD) für eine gegebene Kreiselpumpe im unteren Durchflussbereich für drei Betriebsarten. Fig. 3a zeigt den Verlauf bei ungeregeltem Betrieb und variablem Durchfluss (veränderlicher Strömungswiderstand des Verbraucherkreislaufs), wobei konstante Netzspannung vorausgesetzt wird. bei Fig. 3b und 3c wird vorausgesetzt, dass eine der Grössen n, $\Delta p$ oder R konstant geregelt werden, wobei Fig. 3b die Zusammenhänge bei relativ hohem und die Fig. 3c beiniedrigerem $\Delta p$, n oder R darstellen. Entscheidend ist, dass für eine gegebene Motor-Pumpengruppe diese Funktionszusammenhänge vorbestimmt sind - allerdings abhängig vom Leerlaufwert bei gesperrtem Massendurchfluss. Entsprechende Messungen werden jeweils für die gegebenen Komponenten im voraus entweder individuell, für jedes Fabrikations-Los oder typenweise durchgeführt und durch Speicherung in den Speichermitteln 33 für die Durchführung des Verfahrens zur Wärmemengen-Messung bereitgestellt.In an sich bekannter Weise kann die Speicherung entweder in Form von Wertetabellen oder als Berechnungsalgorithmus mit variablen Ausgangsgrössen erfolgen. Ein bestimmter, gespeicherter Funktionszusammenhang bleibt, ausgehend von einem gemessenen Leerlaufwert, jeweils für die anschliessende Betriebsperiode:bis zur nachfolgenden Leerlaufmessung "gültig".

Es können eine oder mehrere der genannten betriebsgrössen für die laufende bestimmung des Massendurchflusses mittels entsprechender Funktionsspeicherung herangezogen werden; die Auswahl richtet sich nach der jeweiligen Heizungsanlage bzw. den "verfügbaren" Messwertgebern. Es ist bekannt, dass bei Kreiselpumpen, die durch einen Asynchronmotor betrieben werden, die Motordrehzahl, der Motorwiderstand und die Druckdifferenz über der Pumpe mindestens über den praktisch benutzten Durchflussbereich weitgehend die gleiche Abhängigkeit in Funktion des Massendurchflusses aufweisen. (Ueber den Zusammenhang von Drehzahl, Schlupf und Nutzwiderstand bei der Asynchronmaschine siehe Fischer, Rolf - Elektrische Maschinen - 6. Auflage 1986, Carl Hanser Verlag München, Seiten 178-188). In diesem Zusammenhang ist es von Interesse, dass der Motorwiderstand wie auch die elektrische Motorleistung rein elektrisch aus Strom und Spannung ermittelt werden können, weshalb man grundsätzlich ohne zusätzlich einzubauende Geber für die Druckdifferenz oder die Pumpendrehzahl auskommen kann. Von besonderem Vorteil ist auch die Feststellung, dass nicht nur für die elektrische Wirkleistung und den Wirkwiderstand, sondern ebenso für die Scheinleistung und den Scheinwiderstand des Pumpenmotors ein bestimmter Funktionszusammenhang mit dem Massendurchfluss besteht. Es kann also einerseits die elektrische Scheinleistung einfach als Produkt aus der laufend gemessenen Speisespannung und der Stromaufnahme des Pumpenmotors ermittelt werden, und anderseits der elektrische Scheinwiderstand des Motors als Quotient aus Strom und Spannung und daraus die Drehzahl des Pumpenmotors. Der Verlauf der Funktionszusammenhänge (eindeutige, monotone Funktionen) bzw. deren Linearität wird bei den heute üblichen Kreiselpumpen im wesentlichen durch die Konstruktion des Pumpenlaufrades (Austrittswinkel) bestimmt.

Wie aus Fig. 3b und 3c hervorgeht, ergeben sich besonders "brauchbare" Zusammenhänge mit grosser Steigung S zwischen der elektrischen (Wirk- oder Schein-)Leistung P und dem Massendurchfluss MD, wenn die Drehzahl bzw. die Druckdifferenz oder der Motorwiderstand konstant sind. Zur Durchführung der Messung wird deshalb mit Vorteil so vorgegangen, dass man eine der Grössen $\Delta p$, n oder R auf einen konstanten Wert regelt und dann die elektrische Motorleistung laufend misst und aufgrund deren vorbestimmten, abgespeicherten Funktionszusammenhanges mit dem Durchfluss - bei gegebenem Wert der konstant geregelten Grösse - die Durchfluss-Momentanwerte bestimmt. Mit Bezugnahme auf Fig. 3b und 3c - unter Annahme eines linearen Leistungsanstiegs - gilt folgendes:

$$\text{Steigung } S = f(\Delta p \text{ oder } n \text{ oder } R) = \text{gespeicherter Zusammenhang,}$$

und

$$S = \frac{P_1 - P_o}{MD_1} \text{, somit } MD_x = \frac{P_x - P_o}{S}.$$

Daraus ist ersichtlich, dass aus dem gemessenen Leerlaufwert $P_o$ und dem gespeicherten, zugehörigen Funktionszusammenhang der Steigung von P zu jedem gemessenen Momentanwert $P_x$ der jeweilige Massendurchfluss $MD_x$ bestimmbar ist.

Die Konstantregelung einer der drei genannten Grössen kann wahlweise entweder durch beeinflussung der Speisespannung des Pumpenmotors (z.b. durch Chopperung oder durch Phasenanschnittsteuerung) oder aber durch beeinflussung des Strömungswiderstandes im Verbraucherkreislauf erfolgen. Aus betrieblichen Gründen kann es zweckmässig sein, ausser $\Delta p$, n oder R auch die Differenz der Vorlauf- und der Rücklauftemperatur konstant zu regeln, was vor allem durch beeinflussung der Vorlauftemperatur möglich ist.

Die betriebsarten nach Fig. 3b oder 3c bedingen, dass ausser der elektrischen Leistung P eine der weiteren Betriebsgrössen (zwecks Konstantregelung) laufend gemessen wird. Grundsätzlich ist es aber - bei ungeregeltem Betrieb nach Fig. 3a - für die Durchführung des Messverfahrens möglich, mit einer einzigen, laufend gemessenen betriebsgrösse auszukommen.

Abweichend von der Darstellung in Fig. 3b und 3c und vom vorstehend Gesagten ergeben sich aber auch dann für die Messung vorteilhafte Funktionszusammenhänge, wenn man die elektrische Wirk- oder Scheinleistung P des Pumpenmotors auf einen konstanten Wert regelt. Es wird dann eine der drei Grössen $\Delta p$, n oder R laufend gemessen, und aufgrund des vorbestimmten (und gespeicherten) Funktionszusammenhanges zwischen dieser Grösse und dem Durchfluss werden - bei gegebenem konstantem Wert der Motorleistung - die Durchfluss-Momentanwerte bestimmt. Die Konstantregelung der Motorleistung kann dann wiederum durch beeinflussung der Motorspannung oder durch Beeinflussung des Strömungswiderstandes im Verbraucherkreislauf erfolgen, und ebenso kann man durch beeinflussung sowohl der Speisespannung als auch des Strömungswiderstandes die Motorleistung und ausserdem den Durchfluss konstant regeln. Schliesslich kann man auch in diesem Fall (konstant geregelte Motorleistung) zusätzlich die Differenz der Vorlauf- und der Rücklauftemperatur konstant halten, insbesondere indem man die Vorlauftemperatur beeinflusst. Die leztgenannten Regelvorgänge (wie auch die entsprechenden, kombinierten Regelungen ausgehend von Fig. 3b und 3c) erfordern natürlich auch entsprechende hydraulische Regelorgane bzw. geeignete hydraulische Schaltungen des Verbraucherkreislaufs, wie sie weiter unten im Zusammenhang mit Fig. 5, 6 und 7 beschrieben werden. Es kommt auch die Verwendung von Pumpenmotoren mit umschaltbaren Wicklungen in Frage, besonders in den Fällen, wo eine Konstantregelung durch beeinflussung der Speisespannung des Pumpenmotors erfolgt. Es kann dann die Konstantregelung zusätzlich durch Wicklungsumschaltung des Pumpenmotors unterstützt werden. Schliesslich ist zu erwähnen, dass zum Antrieb der Umwälzpumpe (Kreiselpumpe) auch andere Motortypen verwendbar sind (z.B. "DC Brushless"-Motoren), wobei dann wiederum deren elektrische Betriebsdaten in Funktion der hydraulischen Leistung (Massendurchfluss) der Pumpe massgebend sind.

Der Zusammenhang zwischen der jeweils laufend gemessenen betriebsgrösse und dem zu bestimmenden Massendurchfluss des Heizmediums wird im allgemeinen temperaturabhängig sein. Es kann deshalb zur Erhöhung der Messgenauigkeit zweckmässig sein, im Rechenwerk den (jeweils gerade benützten) Funktionszusammenhang in Abhängigkeit von der gemessenen Medium-Temperatur in der Kreiselpumpe (im allgemeinen die Vorlauftemperatur) zu korrigieren.

Die Fig. 4 zeigt einerseits drei Kennlinien I, II und III einer gegebenen Kreiselpumpe bei unterschiedlichen Leistungsstufen. Jede dieser Kennlinien zeigt den Zusammenhang der Förderleistung (Massendurchfluss MD) in Abhängigkeit des Differenzdrucks $\Delta p$ über der Pumpe bei konstanter Netzspannung des Pumpenmotors. Anderseits stellen die parabelförmigen Kurven i, ii und iii in Fig. 4 hydraulische Kennlinien des von der Pumpe gespeisten Verbraucherkreislaufes dar (steilere Kurven mit zunehmendem Strömungswiderstand im Kreislauf). Das Diagramm lässt insbesondere erkennen, dass bei der Regelung und Messung der Wärmeleistung durch kombinierte Beeinflussung der Motorleistung (Stufen I, II oder III) und des Strömungswiderstandes vorbestimmte Arbeits- und Messpunkte eingestellt werden können. Zur Einstellung verschiedener Leistungsstufen ist die Verwendung eines Pumpenmotors mit umschaltbaren Wicklungen zweckmässig.

Im folgenden werden weitere Möglichkeiten der erfindungsgemässen Wärmemengen-Messung wie auch der Regelung des Heizbetriebes anhand der Anlagevarianten nach Fig. 5 bis 7 beschrieben.

Bei der Variante nach Fig. 5 handelt es sich um eine Wohnungsheizung, die an einen Primärkreislauf mit Vorlauf 6 und Rücklauf 8 angeschlossen ist. Der Verbraucher 16 wird durch eine Anzahl Radiatoren 17 gebildet, die an eine Verteilbatterie 29 im Vorlauf angeschlossen und einzeln mittels Handventilen 18 steuerbar sind. Im Vorlauf 12 ist wiederum ein elektrisch steuerbares Absperrventil 22 für die periodische, vorübergehende Sperrung des Medium-Durchflusses vorhanden. Zur Regelung des Wärmeflusses insgesamt ist die Anlage in Beimischschaltung mit Bypass 13 und Dreiweg-Regelventil 24 ausgeführt (der Primärkreislauf wird ohne Druckdifferenz zwischen Vorlauf 6 und Rücklauf 8 betrieben).

Wie bei der Anlage nach Fig. 1 wird die elektrische Leistung P des Pumpenmotors 21 durch Multiplikation von Strom und Spannung in der Schaltung 44 bestimmt. Ausserdem wird laufend die Motordrehzahl n mittels eines an der Pumpe oder dem Motor angebauten Drehzahlgebers 42 gemessen.

Die Messung der Wärmemenge erfolgt grundsätzlich in gleicher Weise wie weiter oben beschrieben: jeweils während der erzwungenen Sperrung des Durchflusses werden die Leerlaufwerte der Motorleistung P und der Drehzahl n gemessen. In den anschliessenden Betriebsperioden mit umlaufendem Medium werden laufend die Motorleistung und/oder die Drehzahl gemessen und aufgrund des genannten Leerlaufwertes und des entsprechenden, gespeicherten Funktionszusammenhanges werden im Rechenwerk die Durchfluss-Momentanwerte bestimmt. Dabei kann die Einheit 30 beispielsweise so programmiert sein, dass die Motordrehzahl jeweils konstant geregelt wird, wobei die bestimmung der Durchfluss-Momentanwerte auf dem für die betreffende Motor-Pumpen-Gruppe spezifischen Zusammenhang zwischen der Motorleistung P und der Pumpen-Förderleistung (Massendurchfluss MD) beruht.

Bei der Beimischschaltung nach Fig. 5 bietet sich eine Möglichkeit zum Drift-Abgleich der beiden Temperaturmessfühler 35 und 36 an: Das Regelventil 24 wird, gesteuert von der Einheit 30 nach einem bestimmten Programm, periodisch in eine Extremstellung gebracht, in welcher der Zufluss vom Primär-Vorlauf 6 gesperrt ist und die gesamte Rücklaufmenge über den Bypass 13 in den Vorlauf umgeleitet wird. bei Zwangsumwälzung des Mediums (bei laufender Pumpe 20) müssen dann nach kurzer Zeit die Fühler 35 und 36 gleiche Messwerte anzeigen; allfällige Differenzen können dann in der Einheit 30 abgeglichen werden.

Bei der Variante nach Fig. 6 handelt es sich ebenfalls um eine an einen Primärkreislauf angeschlossene Unterstation mit mehreren an eine Vorlauf-Verteilbatterie 29 angeschlossenen Heizkörpern 17. Die Anlage ist in Einspritzschaltung ausgeführt, mit Bypass 13 und Regelventil 26 (eine Druckdifferenz im Primärkreislauf zwischen Vorlauf 6 und Rücklauf 8 wird vorausgesetzt). Anstelle eines einzelnen, elektrisch steuerbaren Absperrventils 22 wie bei den Beispielen nach Fig. 1 und 5 sind hier alle Zweiganschlüsse der Verteilbatterie 29, die zu den Einzelverbrauchern 17 führen, mit Regelventilen 22' versehen, welche (gesteuert von der Einheit 30 aus) elektrisch absperrbar sind. Durch programmierte, periodische Sperrung aller dieser Regelventile 22' wird jeweils die Sperrung des Medium-Durchflusses erzwungen, um die für die Wärmemengen-Messung erforderliche bestimmung der Leerlaufwerte vorzunehmen. Anderseits ermöglichen aber dieser Regelventile 22' die individuelle Regelung der Einzelverbraucher 17, also beispielsweise eine Einzelraum-Regelung bei Wohnungsheizungen. Den einzelnen Heizkörpern 17 zugeordnete Raumtemperaturfühler können, wie angedeutet, über einen Datenbus 50 mit der Einheit 30 verbunden sein und zyklisch abgefragt werden. Der Datenbus 50 ist zweckmässigerweise als Zweidrahtbus verpolsicher und mit integrierter Speisung ausgeführt.

Die Messung der Wärmemenge in der oben ausgeführten Weise aufgrund von Betriebswerten und periodisch bestimmten Leerlaufwerten beruht beim Beispiel nach Fig. 6 ausschliesslich auf elektrischen Messungen am Pumpenmotor 21, nämlich der elektrischen Leistung P und dem elektrischen Widerstand R des Pumpenmotors. In einfacher Weise können aufgrund der laufenden Strom- und Spannungsmessung einerseits die Scheinleistung P als Produkt in einer Multiplikatorschaltung 44 und der Scheinwiderstand R als Quotient in einer Divisorschaltung 43 bestimmt werden; beide Schaltungen 43, 44 sind vorzugsweise in der Einheit 30 enthalten. Zur Leistungsregelung des Pumpenmotors 21 ist ein Regler 48, beispielsweise eine Chopperschaltung vorgesehen.

Die Anlagenvariante nach Fig. 7 entspricht hinsichtlich hydraulischer Schaltung, Messverfahren und Regelungsmöglichkeiten weitgehend dem beispiel nach Fig. 6. Eine regeltechnische Besonderheit besteht darin, dass ein Pumpenmotor 21' mit Mehrfachwicklung vorgesehen ist, wobei die Wicklungsumschaltung (Wechsel der Motor-Leistungsstufen) von einem entsprechend ausgestatteten Regler 48' aus efolgt.

Zur Messung der Medium-Temperaturen ist ein einziger Temperaturfühler 35' im Vorlauf vorgesehen. Mit diesem werden die Vorlauf- und die Rücklauftemperatur abwechselnd gemessen, indem man periodisch, bei Zwangsumwälzung des Heizmediums, die gesamte Rücklaufmenge in den Vorlauf umleitet,und zwar im vorliegenden Fall durch periodische Schliessung des Ventils 26, gesteuert durch die Einheit 30.

Zusätzlich zu den elektrisch absperrbaren Einzelventilen 22' bzw. in Reihe zu diesen erhält der Verbraucherkreislauf gemäss Fig. 7 ein weiteres Absperrventil 28, hier eingebaut im Vorlauf 12. Das weitere Absperrventil 28 dient zur Kontrolle der Dichtheit der Ventile 22' - oder, im Falle der Beispiele nach Fig. 1 oder 5, des einzigen Absperrventils 22: Wird das normalerweise vollständig geöffnete Ventil 28 während einer der periodischen Schliessungen der Ventile 22' bzw. des Einzelventils 22 zusätzlich geschlossen, so dürfen sich die dabei gemessenen Leerlaufwerte nicht ändern; ist dies nicht der Fall, so ist dies ein Hinweis für die Undichtheit eines Absperrventils und damit für fehlerhaft ermittelte Leerlaufwerte. Die Betätigung des Ventils 28 zu Kontrollzwecken kann von Hand durch Wartungspersonal oder automatisch gesteuert durch die Einheit 30 in grösseren Zeitabständen erfolgen.

Im Zusammenhang mit den vorstehend bei den Ausführungsbeispielen beschriebenen, vielfältigen Möglichkeiten der Regelung des Heizbetriebes (in Verbindung mit der Wärmemengen-Messung) ist noch auf folgendes hinzuweisen: Eine Konstantregelung der Druckdifferenz über der Pumpe bietet besondere Vorteile sowohl in messtechnischer Hinsicht als auch bezüglich der hydraulischen Betriebsbedingungen ("Regelkomfort"). Es können dabei Strömungsgeräusche weitgehend vermieden und ein günstiger Pumpenwirkungsgrad eingehalten werden. Erfolgen Regeleingriffe elektrisch am Pumpenmotor (Beeinflussung der Pumpenspannung) anstatt hydraulisch am Regelventil, so ergeben sich wiederum erhebliche Energieeinsparungen infolge durchschnittlich geringerer Pumpenleistung (anstatt "Energievernichtung" am Ventil) und auch dadurch geringere Strömungsgeräusche.

Das beschriebene Messverfahren kann in der nachstehenden Weise durch Programmierung der Einheit 30 weiter ausgestaltet werden, vor allem um die Messfehler durch Vermeiden extremer Betriebssituationen niedrig zu halten. So ist es zweckmässig, den Durchfluss und die Differenz der Vorlauf- und der Rücklauftemperatur innerhalb oberer und unterer Grenzwerte ungefähr proportional zueinander zu regeln. In weiterer Ausgestaltung dieser Massnahme ist es zweckmässig, nach Erreichen des oberen Durchfluss-Grenzwertes und weiter zunehmendem Wärmebezug die Temperaturdifferenz durch Erhöhen der Vorlauftemperatur (soweit möglich) allein zu erhöhen. Eine zusätzliche Massnahme ist auch angezeigt, wenn der Durchfluss und/oder die Differenz der Vorlauf- und der Rücklauftemperatur auf festgelegte Minimalwerte absinken, da bei solchen betriebszuständen relativ hohe Messfehler auftreten. Es ist dann zweckmässig, den Durchfluss des Heizmediums während einer vorbestimmten Zeit überhaupt zu sperren.

Die "integrierte" Messung und Betriebsregelung mittels Mehrfach-Ausnützung der Anlagekomponenten ermöglicht auch eine weitgehend automatisierte, programmierte Durchführung von Plausibilitätstests an der Heizungsanlage. Damit lässt sich einerseits eine laufende Betriebsüberwachung mit Signalisierung von Störungen oder "verdächtigen" Betriebszuständen, anderseits die weitgehende betrugssicherheit - Verhinderung des Wärmebezugs ohne Zählung und Verrechnung - erreichen.

Bei der konstruktiven Gestaltung der Heizungsanlage werden zweckmässigerweise die für die Messung und Regelung wesentlichen Teile in einem Hydraulikblock und einem Elektro- und Elektronikblock, allenfalls auch in einer Gesamteinheit vorzugsweise für Wandeinbau zusammengefasst, mit Anschlüssen für Vorlauf und Rücklauf, Verteilbatterie-Abgängen zu den Radiatoren, sowie gemeinsamem Netzanschluss und gegebenenfalls Anschluss für den Zweidrahtbus zu den Raumtemperaturfühlern.

**Patentansprüche**

1. Verfahren zur Wärmemengen-Messung in einer Heizungsanlage mit in einem Verbraucherkreislauf umlaufendem Heizmedium, wobei die Wärmemenge durch Summierung der Momentanwert-Produkte des Medium-Durchflusses und der Differenz zwischen Vorlauf- und Rücklauftemperatur bestimmt wird und wobei die Heizungsanlage eine elektromotorisch angetriebene Kreiselpumpe zur Umwälzung des Heizmediums sowie Temperaturmessmittel zur Bestimmung der Medium-Temperaturen im Vorlauf und im Rücklauf enthält, wobei man:
   - periodisch eine vorübergehende Sperrung des Medium-Durchflusses im Verbraucherkreislauf erzwingt,
   - jeweils bei gesperrtem Durchfluss den Leerlaufwert mindestens einer der Grössen
     - Druckdifferenz ($\Delta p$) der Kreiselpumpe
     - Drehzahl (n) des Pumpenmotors
     - elektrischer Wirk- oder Scheinwiderstand (R) des Pumpenmotors
     - elektrische Wirk- oder Scheinleistung (P) des Pumpenmotors misst,
   - die entsprechende(n) Grösse(n) ($\Delta p$, n, R, P) bei umlaufendem Medium laufend misst, und
   - unter Heranziehung sowohl eines vorbestimmten Funktionszusammenhanges zwischen dieser Grösse und dem Durchfluss, als auch des vorangehend gemessemen Leerlaufwertes ($\Delta p_o$, $n_o$, $R_o$, $P_o$), die Durchfluss-Momentanwerte bestimmt.

2. Verfahren nach Anspruch 1, dadurch gekennzeichnet, dass man eine der drei erstgenannten Grössen ($\Delta p$, n, R) auf einen konstanten Wert regelt, die elektrische Wirk- oder Scheinleistung (P) des Pumpenmotors laufend misst und aufgrund des vorbestimmten Funktionszusammenhanges zwischen der genannten Leistung und dem Durchfluss beim gegebenen, konstanten Wert der vorgenannten Grösse die Durchfluss-Momentanwerte bestimmt.

3. Verfahren nach Anspruch 1, dadurch gekennzeichnet, dass man die elektrische Wirk- oder Scheinleistung (P) des Pumpenmotors auf einen konstanten Wert regelt, eine der drei erstgenannten Grössen ($\Delta p$, n, R) laufend misst und aufgrund des vorbestimmten Funktionszusammenhanges zwischen der einen genannten Grösse und dem Durchfluss beim gegebenen, konstanten Wert der genannten Leistung die Durchfluss-Momentanwerte bestimmt.

4. Verfahren nach Anspruch 1, dadurch gekennzeichnet, dass man einen Pumpenmotor mit umschaltbaren Wicklungen verwendet und eine Wicklungsumschaltung zur Anpassung des Pumpenbetriebs an den jeweiligen Strömungswiderstand des Verbraucherkreislaufes vornimmt.

5. Verfahren nach Anspruch 1, dadurch gekennzeichnet, dass man den Funktionszusammenhang zwischen der laufend gemessenen Grösse ($\Delta p$, n, R, P) und dem Durchfluss in Abhhängigkeit von der gemessenen Medium-Temperatur in der Kreiselpumpe und/oder der Wicklungstemperatur des Pumpenmotors korrigiert.

6. Verfahren nach Anspruch 1, dadurch gekennzeichnet, dass man die Messwerte eines Vorlauf-Temperaturmessorgans und eines Rücklauf-Temperaturmessorgans vergleicht und deren Differenz abgleicht, während man periodisch, bei Zwangsumwälzung des Heizmediums, die gesamte Rücklaufmenge in den Vorlauf umleitet.

7. Verfahren nach Anspruch 1, dadurch gekennzeichnet, dass man die Speisespannung und die Stromaufnahme des Pumpenmotors laufend misst und daraus einerseits die elektrische Scheinleistung als Produkt und anderseits den elektrischen Scheinwiderstand als Quotient und aus letzterem die Drehzahl des Pumpenmotors bestimmt.

8. Verfahren nach Anspruch 1, dadurch gekennzeichnet, dass man bei Absinken des Durchflusses und/oder der Differenz der Vorlauf- und der Rücklauftemperatur auf festgelegte Minimalwerte den Durchfluss während vorbestimmter Zeit sperrt.

9. Heizungsanlage, mit der das Verfahren nach einem der Ansprüche 1 bis 8 durchgeführt wird, mit einer elektromotorisch angetriebenen Kreiselpumpe (20) zur Umwälzung des Heizmediums im Verbraucherkreislauf (12, 14, 16), Temperaturmessmitteln (35, 36) zur Bestimmung der Medium-Temperaturen im Vorlauf (12) und im Rücklauf (14), und einem an die Temperaturmessmittel angeschlossenen Rechenwerk (31) zur Ermittlung der Wärmemenge aus Temperatur- und Durchfluss-Momentanwerten, dadurch **gekennzeichnet,**
dass der Verbraucherkreislauf mindestens ein elektrisch steuerbares Absperrventil (22, 22') enthält, welches mit Zeitschaltmitteln (32) verbunden ist, die das Absperrventil (22, 22') periodisch vorübergehend schliessen,
dass mit dem Rechenwerk (31) Messwertgeber (41, 42, 43, 44) für mindestens eine der Grössen
- Druckdifferenz der Kreiselpumpe (20)
- Drehzahl des Pumpenmotors (21)
- elektrischer Wirk- oder Scheinwiderstand des Pumpenmotors
- elektrische Wirk- oder Scheinleistung des Pumpenmotors verbunden sind,
und dass das Rechenwerk (31) Speichermittel (33) für Funktionszusammenhänge zwischen der mindestens einen genannten Grösse und dem Durchfluss enthält.

10. Heizungsanlage nach Anspruch 9, mit gemeinsamer Netzversorgung für den Pumpenmotor (21) und das Rechenwerk (31), dadurch gekennzeichnet, dass die Anlage-internen Versorgungsleitungen (46) zwischen Pumpenmotor und Rechenwerk gegen missbräuchliche Eingriffe gesichert sind.

11. Heizungsanlage nach Anspruch 9, mit einem Hydraulik-Verteilmodul, welches Verteilbatterien und Regelventile für mehrere Einzelverbraucher (17) aufweist, dadurch gekennzeichnet, dass alle Zweiganschlüsse einer Verteilbatterie (29) mit Regelventilen (22') versehen sind, die elektrisch absperrbar sind.

## Claims

1. Calorimetry process in a heating plant with a heating medium which circulates in a consumption circuit, where the amount of heat is determined by summation of instantaneous value products of the medium flowrate and the difference between delivery and return temperature, and the heating plant comprises an electrically driven centrifugal pump for circulating the heating medium, as well as temperature measuring means for determining the medium temperatures in the delivery and return run, and that
   - a temporary shut-off of medium flow in the consumption circuit is caused periodically;
   - during shut-off of the medium flow, the idle value of at least one of the following values is measured:
      - pressure difference ($\Delta p$) of the centrifugal pump
      - revolutions (n) of the pump motor
      - electrical actual or apparent resistance (R) of the pump motor
      - electrical actual or apparent output (P) of the pump motor;
      - the respective value(s) ($\Delta p$ n, R, P) is/are continuously measured, and
      - the instantaneous flow-rate values are determined by means of a predetermined operational association between this value and the flowrate as well as by the aforemeasured idle value ($\Delta p_o$, $n_o$, $R_o$, $P_o$).

2. Process according to claim 1, **characterized in that** one of the three aforementioned values ($\Delta p$, n, R) is set to a constant value, the electric actual or apparent output (P) of the pump motor is continuously measured, and the instantaneous flow-rate values are determined based on a predetermined operational association between the aforementioned output and the flowrate at a given constant volume of the aforementioned value.

3. Process according to claim 1, **characterized in that** the electric actual or apparent output (P) of the pump motor is regulated to a constant value, one of the three aforementioned values ($\Delta p$, n, R) is continuously measured, and the instantaneous flowrate values are determined as based on the predetermined operational association between the one given value and the flowrate at the given constant value of the mentioned output.

4. Process according to claim 1, **characterized in that** a pump motor with switchable windings is used and that a winding switchover is carried out so as to adapt the pump operation to a respective flow resistance of the consumption circuit.

5. Process according to claim 1, **characterized in that** the operational association between a continuously measured value ($\Delta$p, n, R, P) and the flowrate is corrected in dependence of the measured medium temperature in the circulating pump and/or the winding temperature of the pump motor.

6. Process according to claim 1, **characterized in that** the measured values of a delivery temperature measuring element and of a return temperature measuring element are compared and their difference is levelled, whilst the entire return volume is periodically diverted into the delivery under enforced circulation of the heating medium.

7. Process according to claim 1, **characterized in that** the input voltage and the current intake of the pump motor are continuously measured, thereby determining, on the one hand, the electrical apparent output as a product and, on the other hand, the electrical apparent resistance as a quotient, and from the latter the revolutions of the pump motor.

8. Process according to claim 1, **characterized in that** the flow is shut off to specified minimum values and for a predetermined period in the event of a drop in the flowrate and/or in the difference of delivery and return temperature.

9. Heating plant with which the process is carried out according to one of claims 1 to 8, comprising an electrically driven circulating pump (20) for circulating the heating medium in a consumption circuit (12, 14, 16), temperature-measuring means (35, 36) for determining the medium temperatures in the delivery (12) and in the return (14), and a computer (31) which is connected to the temperature-measuring means fort determining the calorific value of temperature- and instantaneous flowrate values,
**characterized in that**
the consumption circuit includes at least one electrically controlled shut-off valve (22, 22') which is connected to time-switching means (32) which periodically shut the shut-off valve (22, 22') temporarily;
the computer (31) is connected to a measured value output (41, 42, 43, 44) for at least one of the following values:
- pressure difference of the circulating pump (20)
- revolution of the pump motor (21)
- electrical actual or apparent resistance of the pump motor
- electrical actual or apparent output of the pump motor; and that
the computer (31) comprises stores (33) for operational associations between at least one of the named values and the flowrate.

10. Heating plant according to claim 9, with a communal power supply for the pump motor (21) and the computer (31), **characterized in that** the internal plant supply lines (46) are protected against unauthorized interference between pump motor and computer.

11. Heating plant according to claim 9, comprising a hydraulic distribution module comprising distribution batteries and control valves for a plurality of individual consumers (17), **characterized in that** all branch connections of a distribution battery (29) are provided with control valves (22') which can be shut off electrically.

## Revendications

1. Procédé pour mesurer des quantités de chaleur dans une installation de chauffage comportant un fluide de chauffage qui circule dans un circuit d'appareils d'utilisation, et selon lequel la quantité de chaleur est déterminée par addition des produits de valeurs instantanées du débit du fluide par la différence entre la température dans le circuit aller et dans le circuit de retour, et selon lequel l'installation de chauffage contient une pompe centrifuge entraînée par un moteur électrique et servant à faire circuler le fluide de chauffage, ainsi que des moyens de mesure de la température pour déterminer les températures du fluide dans le circuit aller et dans le circuit retour, et selon lequel
- on impose périodiquement une interruption transitoire de la circulation du fluide dans le circuit d'appareils d'utilisation,
- à chaque fois que la circulation est bloquée, on mesure la valeur de marche à vide au moins de l'une des grandeurs
- différence de pression ($\Delta$p) de la pompe centrifuge,

- vitesse de rotation (n) du moteur de la pompe,
- résistance électrique active ou impédance électrique (R) du moteur de la pompe,
- puissance électrique active ou apparente (P) du moteur de la pompe,
- on mesure en permanence la ou les grandeurs correspondantes ($\Delta$p,n,R,P) alors que le fluide est en circulation, et
- on détermine les valeurs instantanées du débit en utilisant aussi bien une relation fonctionnelle prédéterminée entre cette grandeur et le débit que la valeur de marche à vide ($\Delta p_o$, $n_o$, $R_o$, $P_o$) mesurée auparavant.

2. Procédé suivant la revendication 1, carac térisé en ce qu'on règle à une valeur constante l'une des trois grandeurs ($\Delta$p,n,R) indiquées en premier lieu, on mesure en permanence la puissance électrique active ou apparente (P) du moteur de la pompe, et on détermine les valeurs instantanées du débit sur la base de la relation fonctionnelle prédéterminée entre ladite puissance et le débit, pour une valeur constante donnée de la grandeur indiquée précédemment.

3. Procédé selon la revendication 1, caractérisé en ce qu'on règle la puissance électrique active ou apparente (P) du moteur de la pompe à une valeur constante, on mesure en permanence l'une des trois grandeurs ($\Delta$p,n,R) indiquées en premier lieu et, sur la base de la relation fonctionnelle prédéterminée entre cette grandeur et le débit, on détermine les valeurs instantanées du débit pour une valeur constante donnée de ladite puissance.

4. Procédé selon la revendication 1, caractérisé en ce qu'on utilise un moteur de pompe possédant des enroulements commutables et qu'on réalise une commutation des enroulements pour adapter le fonctionnement de la pompe à la résistance respective d'écoulement dans le circuit d'appareils d'utilisation.

5. Procédé selon la revendication 1, caractérisé en ce que l'on corrige la relation fonctionnelle entre la grandeur ($\Delta$p,n,R,P) mesurée en permanence et le débit en fonction de la température mesurée du fluide dans la pompe centrifuge et/ou en fonction de la température des enroulements du moteur de la pompe.

6. Procédé selon la revendication 1, caractérisé en ce que l'on compare les valeurs de mesure d'un élément de mesure de la température dans le circuit aller et d'un élément de mesure de la température dans le circuit de retour et que l'on compense leur différence, tout en envoyant périodiquement toute la quantité du fluide du circuit de retour dans le circuit aller, dans le cadre d'une circulation forcée du fluide de chauffage.

7. Procédé selon la revendication 1, caractérisé en ce qu'on mesure en permanence la tension d'alimentation et l'absorption de courant du moteur de la pompe et qu'à partir de là on détermine d'une part la puissance électrique apparente en tant que produit et d'autre part l'impédance électrique en tant que quotient et, à partir de ces valeurs, on détermine la vitesse de rotation du moteur de la pompe.

8. Procédé selon la revendication 1, caractérisé en ce que lors d'une réduction du débit et/ou de la différence entre la température du circuit aller et la température du circuit retour, on bloque sur des valeurs minimales fixées le débit pendant un intervalle de temps prédéterminé.

9. Installation de chauffage, à l'aide de laquelle est mis en oeuvre le procédé selon l'une des revendications 1 à 8, comportant une pompe centrifuge (20) entraînée par un moteur électrique pour faire circuler le fluide de chauffage dans le circuit d'appareils d'utilisation (12, 14, 16), des moyens (35, 36) de mesure de la température pour déterminer les températures du fluide dans le circuit aller (12) et dans le circuit de retour (14), et une unité de calcul (31), raccordée aux moyens de mesure de la température et servant à déterminer la quantité de chaleur à partir de valeurs instantanées de la température et du débit, caractérisée en ce que le circuit d'appareils d'utilisation contient au moins une soupape de sectionnement (22,22') pouvant être commandée électriquement et qui est reliée à des moyens de commutation temporelle (32), qui ferment périodiquement de façon transitoire la soupape de sectionnement (22,22'), qu'à l'unité de calcul (31) sont reliés des transmetteurs (41,42,43,44) de valeurs de mesure pour au moins l'une des grandeurs
- différence de pression dans la pompe centrifuge (20),
- vitesse de rotation du moteur (21) de la pompe,
- résistance électrique active ou impédance électrique du moteur de la pompe,
- puissance électrique active ou apparente du moteur de la pompe, et
que l'unité de calcul (31) contient des moyens de mémoire (33) pour des relations fonctionnelles entre au moins l'une desdites grandeurs et le débit.

10. Installation de chauffage selon la revendication 9, comportant une alimentation commune du secteur pour le moteur (21) de la pompe et l'unité de calcul (31), caractérisée en ce que les lignes d'alimentation (46), internes à l'installation, entre le moteur de la pompe et l'unité de calcul sont protégées vis-à-vis d'interventions abusives.

11. Installation de chauffage selon la revendication 9, comportant un module de distribution hydraulique, qui comporte des batteries de distribution et des soupapes de régulation pour plusieurs appareils d'utilisation individuels (17), caractérisée en ce que tous les raccords de dérivation d'une batterie de distribution (29) sont équipés de soupapes de régulation (22'), qui peuvent être fermés électriquement.

Fig. 1

Fig. 5

## Fig. 2

Fig. 3

a.

b.

c.

Fig. 4

## Fig. 6

## Fig. 7